# EUROPÄISCHE PATENTSCHRIFT

(11) **EP 1 628 496 B1**
(45) Veröffentlichungstag und Bekanntmachung des Hinweises auf die Patenterteilung: **27.05.2009**
(21) Anmeldenummer: 05017834.2
(22) Anmeldetag: 17.08.2005
(51) Int. Cl.: H04L 29/08, H04W 4/12

(54) **Übertragung und Wiedergabe von Nachrichten in Mobilfunknetzen**
Transmission and reproduction of messages in mobile radio networks
Transmission et reproduction de messages dans des réseaux mobiles radio

(30) Priorität: 19.08.2004 DE 102004040387
(43) Veröffentlichungstag der Anmeldung: 22.02.2006
(73) Patentinhaber: Vodafone Holding GmbH, 40213 Düsseldorf (DE)
(72) Erfinder: Nardo, Stefano Dr., 40237 Düsseldorf (DE); Mehrvarz, Timur, 40459 Düsseldorf (DE); Plücker, Ralf, 45128 Essen (DE)
(74) Vertreter: Weisbrodt, Bernd

(56) Entgegenhaltungen:
- US-A1- 2002 087 656
- US-A1- 2002 160 805
- US-A1- 2003 050 049
- US-A1- 2003 065 802
- GHINI V ET AL: "Smart download on the go: a wireless internet application for music distribution over heterogeneous networks" COMMUNICATIONS, 2004 IEEE INTERNATIONAL CONFERENCE ON PARIS, FRANCE 20-24 JUNE 2004, PISCATAWAY, NJ, USA,IEEE, 20. Juni 2004 (2004-06-20), Seiten 73-79, XP010710348 ISBN: 0-7803-8533-0

## Beschreibung

Die vorliegende Erfindung betrifft ein Verfahren zur Übertragung und Wiedergabe von Nachrichten in Mobilfunknetzen mit den Merkmalen gemäß dem Oberbegriff des Anspruchs 1. Ferner betrifft die Erfindung ein mobiles Endgerät zur Nutzung in Mobilfunknetzen, welches, zur Ausführung des erfindungsgemäßen Verfahrens ausgebildet ist Ein solches Verfahren und mobiles Endgerät ist in der US 2003/0050049 A1 offenbart.

Verfahren zur Übertragung und Wiedergabe von Nachrichten in Mobilfunknetzen sind im Stand der Technik in zahlreichen Ausgestaltungen bekannt und beispielsweise in der EP 0 782 356 B1. in der WO 99/57927, in der US 2002/0160805 A1 und insbesondere in der US 2003/0050049 A1 beschrieben. Nachrichten werden dabei beispielsweise mittels sogenanntem Cellbroadcast - einem nach Funkzellen individualisierbaren alphanumerischen Rundspruchdienst - als Nachrichtendienst eines Mobilfunknetzes an sich in der jeweiligen Funkzelle des Mobilfunknetzes befindende Mobilfunkteilnehmer bzw. deren mobile Endgeräte übertragen und seitens der mobilen Endgeräte wiedergegeben.

Die Bedienbarkeit als auch die Funktionalitäten im Zusammenhang mit der Übertragung von Nachrichten bei derartigen Verfahren sind bisher insgesamt eingeschränkt, schwierig handhabbar und für den entsprechende Dienste nutzenden Mobilfunkteilnehmer, insbesondere mangels Individualisierbarkeit hinsichtlich der Nachrichtenauswahl und -darstellung, in der Regel wenig attraktiv. Dies führt mitunter dazu, dass entsprechende Dienste nicht oder nur selten genutzt werden.

Ausgehend von diesen Stand der Technik liegt der vorliegenden Erfindung die Aufgabe zugrunde, eine gattungsgemäße Übertragung und Wiedergabe von Nachrichten in Mobilfunknetzen zu ermöglichen, welche gesteigerte Nutzerindividualisierungsmögtichkeiten aufweist, insbesondere um eine einfachere, attraktivere und höhere Nutzung entsprechender Nachrichtendienste des Mobilfunknetzes seitens der Mobilfunkteilnehmer als Nutzer zu erzielen.

Diese Aufgabe wird bei einem Verfahren mit den Merkmalen des Oberbegriffs des Anspruchs 1 durch die Merkmale des kennzeichnenden Teils des Anspruchs 1 gelöst.

Der Erfindung liegt die Erkenntnis zugrunde, dass nutzerseitig eine einfachere und attraktivere Nutzung von Nachrichtendiensten gegeben ist, wenn zunächst nur ein Teil einer Nachricht auf das mobile Endgerät eines Nutzers übertragen und wiedergegeben wird und der Nutzer des mobilen Endgerätes durch Auswahl dieses Teils der Nachricht sich - bei Interesse an dem Rest der Nachricht - aktiv den Rest der Nachricht auf sein mobiles Endgerät übertragen und wiedergeben lässt. Der erste Teil der Nachricht wird dabei in einer auswählbaren Form auf das mobile. Endgerät übertragen und wiedergegeben, vorzugsweise als ein auswählbares Grafik- und/oder Testelement, beispielsweise ein Ausschnitt eines Fotos oder nach hart eines sogenannten Icons oder eine Überschrift. Die in auswählbarer Form seitens des mobilen Endgerätes des Nutzers wiedergegebene Teilnachricht ist vorteilhafterweise derart ausgestaltet, dass diese den Nutzer auf die Restnachricht neugierig macht. Ferner wird dem Nutzer des mobilen Endgerätes dadurch ein Auffinden von ihn interessierenden Nachrichten erleichtert, da durch die Teilnachrichten quasi ein "Überfliegen" von Nachrichten ähnlich dem Vorgang beim Zeitungslesen ermöglicht wird.

Gemäß einem weiteren Vorschlag der Erfindung wird bei Auswahl der in auswählbarer Form wiedergegebenen Teilnachricht die gesamte Nachricht seitens des mobilen Endgerätes wiedergegeben. Dadurch wird bei Auswahl der Teilnachricht nicht nur die Restnachricht, sondern die gesamte Nachricht wiedergegeben. Bei einer weiteren vorteilhaften Ausgestaltung der Erfindung beinhaltet die in auswählbarer Form wiedergegebene Teilnachricht eine Verknüpfung zu zumindest dem verbleibenden Teil der Nachricht. Dadurch ist quasi eine Verlinkung zumindest zu der Restnachricht gegeben, die dann über einen Nachrichtendienst des Mobilfunknetzes auf das mobile Endgerät übertragen und seitens desselben wiedergegeben wird Vorteilhafterweise beinhaltet die in auswählbarer Form wiedergegebene Teilnachricht eine Verknüpfung zu der gesamten Nachricht. Dadurch ist quasi eine Verlinkung gegeben, mit der bei Auswahl der in auswählbarer Form vorliegenden Teilnachricht über einen Nachrichtendienst des Mobilfunknetzes die gesamte Nachricht, also der Informationsgehalt der in auswählbarer Form vorliegenden Teilnachricht und der Restnachricht, auf das mobile Endgerät übertragen und seitens desselben wiedergegeben wird. Die Teilnachricht ist bei diesen Ausgestaltungen vorteilhafterweise als ein sogenannter Link-Button ausgebildet, so dass die Handhabung für den Nutzer des mobilen Endgerätes insgesamt weiter vereinfacht ist. Vorteilhafterweise erfolgt die Auswahl einer in einer auswählbaren Form seitens eines mobilen Endgerätes wiedergegeben Teilnachricht durch eine Aktivierungseingabe seitens des mobilen Endgerätes, vorzugsweise durch Tasteneingabe seitens einer Eingabeeinrichtung des mobilen Endgerätes.

Eine weitere vorteilhafte Ausgestaltung der Erfindung sieht vor, dass die in auswählbarer Form wiedergegebene Teilnachricht und/oder zumindest der verbleibende Teil der Nachricht in einem vorgebbaren Anzeigebereich einer optischen Anzeigeeinrichtung des mobilen Endgerätes wiedergegeben wird. Der Anzeigebereich für die in auswählbarer Form wiedergegebene Teilnachricht und der Anzeigebereich für zumindest den verbleibenden Teil der Nachricht müssen dabei nicht miteinander übereinstimmen. Vorteilhafterweise ist der vorgebbare Anzeigebereich ein Teilbereich des gesamten Anzeigebereichs der optischen Anzeigeeinrichtung des mobilen Endgerätes. Seitens des Anzeigebereichs der optischen Anzeigeinrichtung des mobilen Endgerätes sind so neben den üblichen Anzeigen in einem aus- und vorgebbaren Bereich die Nachrichten, also die Teilnachrichten und/oder die Rest- bzw. Gesamtnachrichten, wiedergebbar. Dadurch wird eine weitere Individualisierung für den Nutzer des mobilen Endgerätes bereitgestellt. In einer weiteren vorteilhaften Ausgestaltung der Erfindung werden Nachrichten in dem vorgebbaren Anzeigebereich horizontal oder vertikal nebeneinander wiedergegeben. Vorteilhafterweise ist die Wiedergaberichtung der Nachrichten einstellbar, vorzugsweise seitens des mobilen Endgerätes. Durch die Einstellmöglichkeiten hinsichtlich der Nachrichtenwiedergabe wird die Handhabung für den Nutzer des mobilen Endgerätes weiter individualisierbar und damit hinsichtlich der individuellen Bedürfnisse des Nutzers des mobilen Endgerätes vereinfacht. In einer weiteren vorteilhaften Ausgestaltung der Erfindung wird in dem vorgebbaren Anzeigebereich der optischen Anzeigeeinrichtung des mobilen Endgerätes wenigstens eine in einer auswählbaren Form seitens eines mobilen Endgerätes wiedergebbare Teilnachricht wiedergegeben.

Gemäß einem besonders vorteilhaften Vorschlag der Erfindung werden Nachrichten in verschiedenen thematischen Kategorien wiedergegeben. Thematische Kategorien im Sinne der vorliegenden Erfindung sind Informationen bzw. Nachrichten zu bestimmten Themenschwerpunkten, insbesondere nach Art von Informations- bzw.

Nachrichten-Kanälen, wo Informationen bzw. Nachrichten beispielsweise in Kategorien wie Sport, mit Unterkategorien wie Fußball, Formel 1 und dergleichen, oder Kategorien wie Unterhaltung, Wetter, Börse, Musik, Gesundheit oder dergleichen Kategorien mit entsprechenden Unterkategorien. Die Kategorien sind vorteilhafterweise seitens des mobilen Endgerätes auswählbar und/oder vorgebbar. In einer weiteren vorteilhaften Ausgestaltung der Erfindung werden Nachrichten aus mindestens zwei Kategorien seitens des mobilen Endgerätes wiedergegeben, besonders bevorzugt gleichzeitig. So kann der Nutzer des mobilen Endgerätes sich über die Teilnachrichten gezielt Nachrichten aus bzw. zu ihn besonders interessierenden thematischen Kategorien seitens des mobilen Endgerätes wiedergeben lassen. Gemäß einem weiteren vorteilhaften Vorschlag der Erfindung ist zumindest der verbleibende Teil der Nachricht an den Informationsgehalt der Nachricht angepasst. So können beispielsweise Wetterinformationen in Text- und/oder graphischer Form wiedergegeben werden, wobei vorteilhafterweise lokal am Ort des Nutzers des mobilen Endgerätes besonders interessierende Informationen besondere Berücksichtigung finden.

Vorteilhafterweise werden in einer weiteren Ausgestaltung der Erfindung die zeitlich aktuellsten in auswählbarer Form wiedergebbaren Teilnachrichten und/oder zumindest die verbleibenden Teile der Nachrichten in einer vorgebbaren Anzahl seitens des mobilen Endgerätes wiedergebbar gespeichert. So kann der Nutzer des mobilen Endgerätes sich in Abhängigkeit der Anzahl der gespeicherten letzten Nachrichten, die vorteilhafterweise seitens des mobilen Endgerätes einstellbar ist, über aktuelle Entwicklungen informieren, beispielsweise Aktienkurse, oder ihn besonders interessierende Nachrichten speichern und beispielsweise an andere Nutzer von mobilen Endgeräten verschicken, beispielsweise als sogenannte MMS oder dergleichen.

In einer bevorzugten Ausgestaltung der Erfindung ist der Nachrichtendienst des Mobilfunknetzes ein Rundspruchdienst, vorzugsweise ein nach Funkzellen individualisierbarer alphanumerischer Rundspruchdienst (Cellbroadcast). Vorteilhafterweise ist die in auswählbarer Form wiedergegebene Teilnachricht eine Cellbroadcast-Nachricht. In einer weiteren bevorzugten Ausgestaltung der Erfindung wird bei Auswahl der in auswählbarer Form wiedergegebenen Teilnachricht zumindest der verbleibende Teil der Nachricht mit einem weiteren Nachrichtendienst, vorzugsweise mittels WAP, XHTML oder dergleichen, zur Wiedergabe gebracht. Durch die als Cellbroadcast-Nachricht ausgebildete, in auswählbarer Form seitens des mobilen Endgerätes wiedergegebene, vorteilhafterweise für den Nutzer kostenfreien Teilnachricht ist der Nutzer so für ihn interessierende Nachrichten neugierig machbar. Bei Auswahl der Teilnachricht ist die Restnachricht dann vorteilhafterweise für den Nutzer kostenpflichtig.

Bei dem erfindungsgemäßen mobilen Endgerät zur Nutzung in Mobilfunknetzen, zur Ausführung des eines erfindungsgemäßen Verfahrens handelt es sich vorteilhafterweise um ein Mobilfunktelefon.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: eine Anzeigeeinrichtung eines mobilen Endgerätes mit einem Ausführungsbeispiel für eine erfindungsgemäße Nachrichtenwiedergabe;
- Fig. 2: eine Anzeigeeinrichtung eines mobilen Endgerätes mit einem weiteren Ausführungsbeispiel für eine erfindungsgemäße Nachrichtenwiedergabe und
- Fig. 3: eine Anzeigeeinrichtung eines mobilen Endgerätes mit einem Ausführungsbeispiel für eine erfindungsgemäße Auswahl thematischer Kategorien von Nachrichten einer erfindungsgemäßen Nachrichtenwiedergabe.

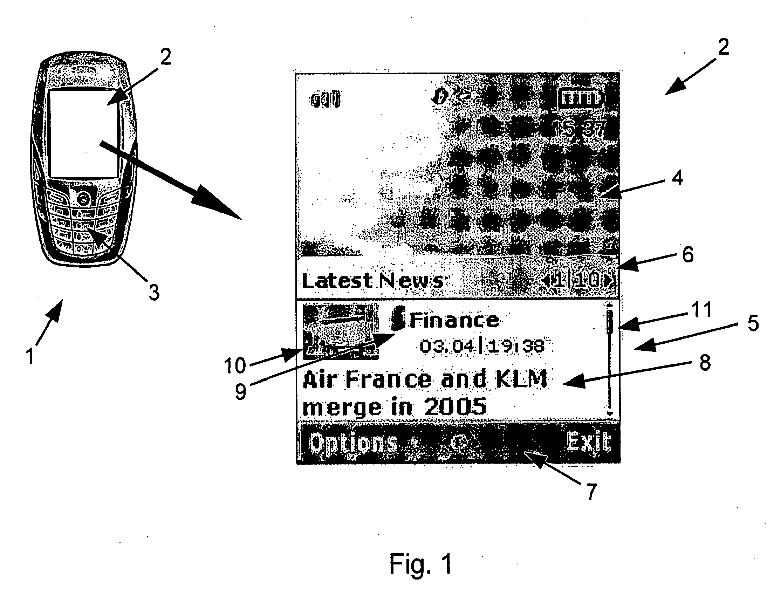

Die Figuren 1, 2 und 3 zeigen ein als mobiles Endgerät zur Nutzung in Mobilfunknetzen dienendes Mobilfunktelefon 1, mit einer optischen Anzeigeeinrichtung 2 und einer Eingabeeinrichtung 3, vorliegend einem mehrfarbigem Display 2 und einer mehrere Tasten aufweisenden Tastatur 3. Das Display 2 des Mobilfunktelefons 1 ist in den Figuren 1 bis 3 im Detail vergrößert dargestellt.

Bei dem Ausführungsbeispiel gemäß Fig. 1 ist in dem unteren Bereich des Wolken als Hintergrundbild darstellenden Anzeigebereichs 4 der Anzeigeeinrichtung 2 ein Nachrichtenanzeigebereich 5 nach Art eines Fensters wiedergegeben. Der Nachrichtenanzeigebereich 5 weist im Bereich der oberen Begrenzung desselben eine Nachrichtenstatusanzeige 6 und im Bereich der unteren Begrenzung eine Eingabe-/Steueranzeige 7 auf. Die Nachrichtenstatusanzeige 6 "Latest News" zeigt an, welche der zeitlich aktuellsten Nachricht gerade in dem darunter liegenden Bereich des Nachrichtenanzeigebereichs 5 wiedergegeben wird. Die Eingabe-/Steueranzeige 7 zeigt die möglichen Auswahl- und Steuereingaben an, beispielsweise zur Auswahl von Teilnachrichten 8, die in dem Bereich zwischen der Nachrichtenstatusanzeige 6 und der Eingabe-/Steueranzeige 7 des Nachrichtenanzeigebereichs 5 wiedergegeben werden. Ferner werden vorliegend in dem Bereich zwischen der Nachrichtenstatusanzeige 6 und der Eingabe-/Steueranzeige 7 des Nachrichtenanzeigebereichs 5 graphische Symbole der jeweiligen thematischen Kategorie 9 bzw. Unterkategorie 10 wiedergegeben, vorliegend zur thematischen Kategorie "Finance". Die in auswählbarer Form wiedergegebene Teilnachricht 8 ist mittels im Bereich zwischen der Nachrichtenstatusanzeige 6 und der Eingabe-/Steueranzeige 7 des Nachrichtenanzeigebereichs 5 wiedergegebener Bildlaufleiste weiter auswählbar durch entsprechende Tasteneingabe seitens der Tastatur 3 des Mobilfunktelefons 1. Die in auswählbarer Form als Link wiedergegebene Teilnachricht 8 ist vorliegend eine Textzeile der Nachricht.

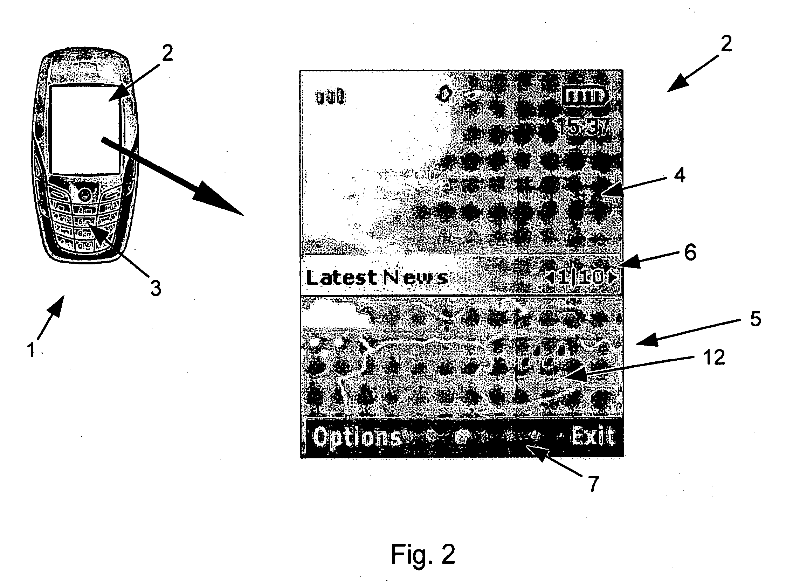

Bei dem Ausführungsbeispiel gemäß Fig. 2 ist dem Bereich zwischen der Nachrichtenstatusanzeige 6 und der Eingabe-/Steueranzeige 7 des Nachrichtenanzeigebereichs 5 in auswählbarer Form als Link eine graphisch ausgestaltete Teilnachricht 12 wiedergegeben, vorliegend eine Wetterkarte, der entsprechenden thematischen Kategorie bzw. Unterkategorie.

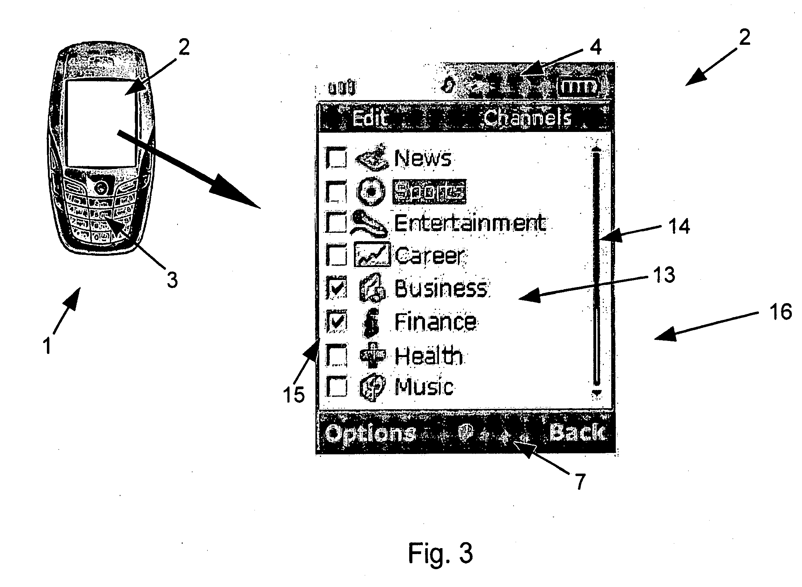

Bei dem Ausführungsbeispiel gemäß Fig. 3 ist die von dem Nutzer des Mobilfunktelefons 1 vornehmbare Auswahl ihn interessierender thematischer Kategorien 13 von Nachrichten dargestellt, die in dem Kategorienauswahlanzeigebereich 16 des Anzeigebereichs 4 der Anzeigeeinrichtung 2 des Mobilfunktelefons 1 wiedergegeben werden. Über die Bildlaufleiste 14 und entsprechende Tasteneingabe seitens der Tastatur 3 des Mobilfunktelefons 1 entsprechend den in der Eingabe-/Steueranzeige 7 angezeigten Eingabe- bzw. Steuermöglichkeiten sind weiter - hier nicht dargestellte - thematische Nachrichtenkategorien 13 wiedergebbar und auswählbar. Bei dem Ausführungsbeispiel in Fig. 3 sind dementsprechend die Kategorien "Business" und "Finance" ausgewählt, wie anhand der mit 15 gekennzeichneten Auswahlhaken erkennbar.

Die in den Figuren dargestellten Ausführungsbeispiele dienen lediglich der Erläuterung der Erfindung und sind für diese nicht beschränkend.

### Bezugszeichenliste

- 1: mobiles Endgerät/Mobilfunktelefon
- 2: Anzeigeeinrichtung/Display (mobiles Endgerät (1))
- 3: Eingabeeinrichtung/Tastatur (mobiles Endgerät (1))
- 4: Anzeigebereich mit Hintergrundbild (Wallpaper)
- 5: Nachrichtenanzeigebereich
- 6: Nachrichtenstatusanzeige
- 7: Eingabe-/Steueranzeige
- 8: auswählbare Teilnachricht
- 9: thematische Kategorie
- 10: Graphisches Element (Unterkategorie)
- 11: Bildlaufleiste (Nachrichtenanzeigebereich (5))
- 12: auswählbare Teilnachricht
- 13: thematische Kategorien
- 14: Bildlaufleiste (Nachrichtenanzeigebereich (5))
- 15: ausgewählte Kategorien/Auswahlhaken
- 16: Kategorienauswahlanzeigebereich

## Patentansprüche

1. Verfahren zur Übertragung und Wiedergabe von Nachrichten in Mobitfunknetzen, wobei Nachrichten mittels eines Nachrichtendienstes eines Mobilfunknetzes auf mobile Endgeräte (1) übertragen und seitens der mobilen Endgeräte (1) wiedergegeben werden, wobei ein Teil (8, 12) einer Nachricht in einer auswählbaren Form seitens eines mobilen Endgerätes (1) wiedergegeben und bei Auswahl zumindest der verbleibende Teil der Nachricht seitens des mobilen Endgerätes (1) wiedergegeben wird,
**dadurch gekennzeichnet,**
**dass** die in auswählbarer Form wiedergegebene Teilnachricht (8, 12) und/oder zumindest der verbleibende Teil der Nachricht in einem nutzerindividuell vorgebbaren Anzeigebereich (5) einer optischen Anzeigeeinrichtung (2) des mobilen Endgerätes (1) wiedergegeben wird.

2. Verfahren nach Anspruch 1, **dadurch gekennzeichnet, dass** der vorgebbare Anzeigebereich (5) ein Teilbereich des gesamten Anzeigebereichs (4) der optischen Anzeigeeinrichtung (2) des mobilen Endgerätes (1) ist.

3. Verfahren nach Anspruch 1 oder Anspruch 2, **dadurch gekennzeichnet, dass** Nachrichten in dem vorgebbaren Anzeigebereich (5) horizontal oder vertikal nebeneinander wiedergegeben werden.

4. Verfahren nach Anspruch 3, **dadurch gekennzeichnet, dass** die Wiedergaberichtung der Nachrichten seitens des mobilen Endgerätes (1) einstellbar ist.

5. Verfahren nach einem der Ansprüche 1 bis 4, **dadurch gekennzeichnet, dass** bei Auswahl der in auswählbarer Form wiedergegebenen Teilnachricht (8, 12) die gesamte Nachricht seitens des mobilen Endgerätes (1) wiedergegeben wird.

6. Verfahren nach einem der Ansprüche 1 bis 5, **dadurch gekennzeichnet, dass** die in auswählbarer Form wiedergegebene Teilnachricht (8, 12) eine Verknüpfung zu zumindest dem verbleibenden Teil der Nachricht beinhaltet.

7. Verfahren nach Anspruch 5 oder Anspruch 6, **dadurch gekennzeichnet, dass** die in auswählbarer Form wiedergegebene Teilnachricht (8, 12) eine Verknüpfung zu der gesamten Nachricht beinhaltet.

8. Verfahren nach einem der Ansprüche 1 bis 7, **dadurch gekennzeichnet, dass** in dem vorgebbaren Anzeigebereich (5) der optischen Anzeigeeinrichtung (2) des mobilen Endgerätes (1) wenigstens eine in einer auswählbaren Form seitens eines mobilen Endgerätes (1) wiedergebbare Teilnachricht (8, 12) wiedergegeben wird.

9. Verfahren nach einem der Ansprüche 1 bis 8, **dadurch gekennzeichnet, dass** Nachrichten in verschiedenen thematischen Kategorien (9,13) wiedergegeben werden.

10. Verfahren nach Anspruch 9, **dadurch gekennzeichnet, dass** die Kategorien (9, 13) seitens des mobilen Endgerätes (1) auswählbar und/oder vorgebbar sind.

11. Verfahren nach Anspruch 9 oder Anspruch 10, **dadurch gekennzeichnet, dass** Nachrichten aus mindestens zwei Kategorien (9, 13) seitens des mobilen Endgerätes (1) wiedergegeben werden, vorzugsweise gleichzeitig.

12. Verfahren nach einem der Ansprüche 1 bis 11, **dadurch gekennzeichnet, dass** die zeitlich aktuellsten in auswählbarer Form wiedergebbaren Teilnachrichten (8, 12) und/oder zumindest die verbleibenden Teile der Nachrichten in einer vorgebbaren Anzahl seitens des mobilen Endgerätes (1) wiedergebbar gespeichert werden.

13. Verfahren nach einem der Ansprüche 1 bis 12, **dadurch gekennzeichnet, dass** der Nachrichtendienst des Mobilfunknetzes ein Rundspruchdienst, vorzugsweise ein nach Funkzellen individualisierbarer alphanumerischer Rundspruchdienst (Cellbroadcast) ist.

14. Verfahren nach Anspruch 13, **dadurch gekennzeichnet, dass** die in auswählbarer Form wiedergegebene Teilnachricht (8, 12) eine Cellbroadcast-Nachricht ist.

15. Verfahren nach Anspruch 13 oder Anspruch 14, **dadurch gekennzeichnet, dass** bei Auswahl der in auswählbarer Form wiedergegebenen Teilnachricht (8, 12) zumindest der verbleibende Teil der Nachricht mit einem weiteren Nachrichtendienst, vorzugsweise mittels WAP oder XHTML, zur Wiedergabe gebracht wird.

16. Verfahren nach einem der Ansprüche 1 bis 15, **dadurch gekennzeichnet, dass** die Auswahl einer in einer auswählbaren Form seitens eines mobilen Endgerätes (1) wiedergegeben Teilnachricht (8, 12) durch eine Aktivierungseingabe seitens des mobilen Endgerätes (1), vorzugsweise durch Tasteneingabe seitens einer Eingabeeinrichtung (3) des mobilen Endgerätes (1), erfolgt.

17. Verfahren nach einem der Ansprüche 1 bis 16, **dadurch gekennzeichnet, dass** die in auswählbarer Form wiedergebbare Teilnachricht (8, 12) ein Grafik- und/oder Textelement ist.

18. Verfahren nach einem der Ansprüche 1 bis 17, **dadurch gekennzeichnet, dass** zumindest der verbleibende Teil der Nachricht an den Informationsgehalt der Nachricht angepasst ist.

19. Mobiles Endgerät (1) zur Nutzung in Mobilfunknetzen, vorzugsweise in Form eines Mobilfunktelefons (1), **dadurch gekennzeichnet, dass** dieses zur Ausführung eines Verfahrens nach einem der Ansprüche 1 bis 18 ausgebildet ist.

## Claims

1. A method for the transmission and reproduction of messages in mobile networks, wherein messages are transmitted to mobile terminals (1) by means of a message service of a mobile network and reproduced by means of the mobile terminals (1), wherein a part (8, 12) of a message will be reproduced in a selectable form by means of a mobile terminal (1) and upon selection at least the remaining part of the message will be reproduced by means of the mobile terminal (1),
**characterized in that**
the partial message (8, 12) reproduced in a selectable form and/or at least the remaining part of the message will be reproduced in a display area (5) of an optical display device (2) of the mobile terminal (1), which display area (5) is individually predefinable by an user of the mobile terminal (1).

2. A method according to claim 1, **characterized in that** the predefinable display area (5) is a partial area of the entire display area (4) of the optical display device (2) of the mobile terminal (1).

3. A method according to claim 1 or claim 2, **characterized in that** the messages will be reproduced horizontally or vertically side by side in the predefinable display area (5).

4. A method according to claim 3, **characterized in that** the orientation of the reproduction of the messages can be set by means of the mobile terminal (1).

5. A method according to one of the claims 1 through 4, **characterized in that** if the partial message (8, 12) reproduced in a selectable form is selected, the entire message will be reproduced by the mobile terminal (1).

6. A method according to one of the claims 1 through 5, **characterized in that** the partial message (8, 12) reproduced in a selectable form comprises a linkage to at least the remaining part of the message.

7. A method according to claim 5 or claim 6, **characterized in that** the partial message (8, 12) reproduced in a selectable form comprises a linkage to the entire message.

8. A method according to one of the claims 1 through 7, **characterized in that** at least one partial message (8, 12) that can be reproduced in a selectable form by means of a mobile terminal (1) will be reproduced in the predefinable display area (5) of the optical display device (2) of the mobile terminal (1).

9. A method according to one of the claims 1 through 8, **characterized in that** messages are reproduced in different subject categories (9, 13).

10. A method according to claim 9, **characterized in that** the categories (9, 13) can be selected and/or predetermined by means of the mobile terminal (1).

11. A method according to claim 9 or claim 10, **characterized in that** messages of at least two categories (9, 13) are reproduced by means of the mobile terminal (1), preferably simultaneously.

12. A method according to one of the claims 1 through 11, **characterized in that** a predefinable number of the most topical partial messages (8, 12) that can be reproduced in a selectable form and/or at least the remaining parts of the messages will be stored in a reproducible manner by means of the mobile terminal (1).

13. A method according to one of the claims 1 through 12, **characterized in that** the message service of the mobile network is a broadcast service, preferably an alphanumeric broadcast service that can be individualized according to radio cells (cell broadcast).

14. A method according to claim 13, **characterized in that** the partial message (8, 12) reproduced in a selectable form is a cell broadcast message.

15. A method according claim 13 or claim 14, **characterized in that** if the partial message (8, 12) reproduced in a selectable form is selected, at least the remaining part of the message will be reproduced by means of another message service, preferably by means of WAP or XHTML.

16. A method according to one of the claims 1 through 15, **characterized in that** the selection of a partial message (8, 12) reproduced in a selectable form by means of a mobile terminal (1) is realized by an activation input by means of the mobile terminal (1), preferably by key input by means of an input device (3) of the mobile terminal (1).

17. A method according to one of the claims 1 through 16, **characterized in that** the partial message (8, 12) that can be reproduced in a selectable form is a graphic and/or text element.

18. A method according to one of the claims 1 through 17, **characterized in that** at least the remaining part of the message is adapted to the information content of the message.

19. A mobile terminal (1) for the use in mobile networks, preferably in form of a mobile phone (1), **characterized in that** this one is adapted to carry out a method according to one of the claims 1 through 18.

## Revendications

1. Procédé de transmission et de reproduction des messages dans des réseaux mobiles, des messages étant transmis aux terminaux mobiles (1) par moyen d'un service de messages d'un réseau mobile et étant reproduits par les terminaux mobiles (1), une part (8, 12) d'un message étant reproduit sous forme sélectionnable par moyen d'un terminal mobile (1), et au cas de sélection au moins la part restante du message sera reproduite par le terminal mobile (1),
**caractérisé en ce**
**que** le message partiel (8, 12) reproduit sous forme sélectionnable et/ou au moins la part restante du message est reproduit dans une zone d'affichage (5), prédéterminée individuellement par l'utilisateur, d'un dispositif d'affichage optique (2) d'un terminal mobile (1).

2. Procédé selon la revendication 1, **caractérisé en ce que** la zone d'affichage (5) prédéterminée est une zone partielle de la zone d'affichage entière (4) du dispositif d'affichage optique (2) du terminal mobile (1).

3. Procédé selon la revendication 1 ou la revendication 2, **caractérisé en ce que** des messages sont reproduits horizontalement ou verticalement l'un à côté de l'autre dans la zone d'affichage (5) prédéterminée.

4. Procédé selon la revendication 3, **caractérisé en ce qu'**on peut fixer l'orientation des messages reproduits par moyen du terminal mobile (1).

5. Procédé selon l'une des revendications 1 à 4, **caractérisé en ce qu'**au cas de sélection du message partiel (8, 12) reproduit sous forme sélectionnable, le message entier sera reproduit par le terminal mobile (1).

6. Procédé selon l'une des revendications 1 à 5, **caractérisé en ce que** le message partiel (8, 12) reproduit sous forme sélectionnable comprend un lien à au moins la part restante du message.

7. Procédé selon la revendication 5 ou la revendication 6, **caractérisé en ce que** le message partiel (8, 12) reproduit sous forme sélectionnable comprend un lien au message entier.

8. Procédé selon l'une des revendications 1 à 7, **caractérisé en ce qu'**au moins un message partiel (8, 12) qu'un terminal mobile (1) peut reproduire sous forme sélectionnable sera reproduit dans la zone d'affichage (5) prédéterminée du dispositif d'affichage (2) du terminal mobile (1).

9. Procédé selon l'une des revendications 1 à 8, **caractérisé en ce que** des messages sont reproduits dans des catégories thématiques différentes (9, 13).

10. Procédé selon la revendication 9, **caractérisé en ce qu'**on peut sélectionner et/ou prédéterminer les catégories (9, 13) par moyen du terminal mobile (1).

11. Procédé selon la revendication 9 ou la revendication 10, **caractérisé en ce que** des messages d'au moins deux catégories (9, 13) sont reproduits par moyen du terminal mobile (1), de préférence simultanément.

12. Procédé selon l'une des revendications 1 à 11, **caractérisé en ce qu'**un nombre prédéterminé de messages partiels (8, 12) les plus actuels et reproduits sous forme sélectionnable et/ou au moins de parts restantes des messages est mémorisé de manière reproductible par moyen du terminal mobile (1).

13. Procédé selon l'une des revendications 1 à 12, **caractérisé en ce que** le service de messages du réseau mobile est un service de radiodiffusion, de préférence un service de radiodiffusion alphanumérique qu'on peut individualiser selon les cellules de radio (cell broadcast).

14. Procédé selon la revendication 13, **caractérisé en ce que** le message partiel (8, 12) reproduit sous forme sélectionnable est un message de cellbroadcast.

15. Procédé selon la revendication 13 ou la revendication 14, **caractérisé en ce qu'**au cas de sélection du message partiel (8, 12) reproduit sous forme sélectionnable, au moins la part restante du message sera reproduit par un autre service de messages, de préférence par moyen de WAP ou XHTML.

16. Procédé selon l'une des revendications 1 à 15, **caractérisé en ce qu'**on sélectionne un message partiel (8, 12) reproduit sous forme sélectionnable par moyen d'un terminal mobile (1) par une entrée d'activation par moyen du terminal mobile (1), de préférence par une entrée à l'aide des touches d'un dispositif d'entrée (3) du terminal mobile (1).

17. Procédé selon l'une des revendications 1 à 16, **caractérisé en ce que** le message partiel (8, 12) reproduit sous forme sélectionnable est un élément graphique et/ou de texte.

18. Procédé selon l'une des revendications 1 à 17, **caractérisé en ce qu'**au moins la part restante du message est adaptée au contenu d'informations du message.

19. Terminal mobile (1) pour l'utilisation dans des réseaux mobiles, de préférence sous forme d'un téléphone mobile (1), **caractérisé en ce que** celui-ci est configuré pour l'exécution du procédé selon l'une des revendications 1 à 18.
